(19) Europäisches Patentamt
European Patent Office
Office européen des brevets

(11) **EP 2 249 571 A1**

(12) **EUROPEAN PATENT APPLICATION**

(43) Date of publication:
**10.11.2010 Bulletin 2010/45**

(51) Int Cl.:
***H04N 7/26*** *(2006.01)*

(21) Application number: **09305392.4**

(22) Date of filing: **04.05.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(71) Applicant: **Thomson Licensing SA 92130 Issy-les-Moulineaux (FR)**

(72) Inventors:
• **Yang, Jiheng 100085 Beijing (CN)**

• **Li, Yumeng 100085 Beijing (CN)**

(74) Representative: **Rittner, Karsten Deutsche Thomson OHG European Patent Operations Karl-Wiechert-Allee 74 30625 Hannover (DE)**

(54) **Method and device for encoding an image frame comprising macroblocks**

(57)     This invention aims to improve parallelism of rate control algorithm at macroblock level in H.264/AVC, for instance, and also select appropriate quantization parameter for macroblocks to get good compression performance on the basis of meeting bit rate constraints accurately.

Thus, a method for encoding an image frame comprising macroblocks is proposed, said method comprises the steps of using original image data of the image frame for determining (PIP), for each macroblock, a corresponding intra-prediction, determining (RE), for each macroblock, a corresponding residual, determining (VRE), for each macroblock, a variance of the corresponding residual, determining a frame target bit rate for the image frame, using the frame target bit rate and at least one of the determined variances for determining (TBA), for each macroblock, a corresponding macroblock target bit rate, using the macroblock target bit rates for determining (QPC), for each residual, a corresponding target quantization parameter, and encoding (ENC) the residual using the corresponding quantization parameters.

PMB

Figure 2

**Description**

Technical Field

The invention is made in the technical field of rate control suited for video compression, for instance, MPEG Part-10 H.264/AVC compression.

Background

In video coding, rate control is employed to control the output bit-rate of the video encoder according to the network condition and to improve the video presentation quality.

In H.264, RDO is used for mode decision. To perform RDO, ao quantization parameter (QP) should be firstly determined based on the mean absolute difference (MAD), which is only available after RDO. This chicken-egg dilemma may be resolved by a linear model for MAD prediction.

However, accuracy of such models relies heavily on the spatial correlation of successive frames. Therefore, He and Mitra proposed in "Optimum Bit Allocation and Accurate Rate Control for Video Coding via $\rho$-domain Source Modelling," IEEE Trans. Circuits Syst. Video Technol., vol.12, pp 840-849, 2002, a linear $\rho$-domain source model wherein $\rho$ denotes the percentages of zeros in quantized transform coefficients as a strict linear relationship of coding bits with $\rho$ has been observed.

A target average percentage $\rho$ of zeros may be used for determining a target quantized signal energy $E_q$ as described by S. Milani, L. Celetto, and G. Mian, in "An accurate low-complexity rate control algorithm based on ($\rho$, Eq)-Domain," IEEE Trans. Circuits Syst. Video Technol. , vol. 18, no 2, Feb. 2008.

Invention

No matter which model is used for rate control, rate control at macroblock level is in serial order, which can not exploit the best power of many-core systems.

This invention aims to improve parallelism of rate control algorithm at macroblock level in H.264/AVC, for instance, and also select appropriate quantization parameter for macroblocks to get good compression performance on the basis of meeting bit rate constraints accurately.

To achieve the above stated goal, a parallel implementable macroblock level rate control method for video coding is proposed. The proposed method ensures that macroblock level rate control algorithm can be efficiently implemented using many-core processors in terms of both coding efficiency and speed.

That is, a rate control method is proposed which can generate a video bit-stream according to the input target bit-rate given and which allows for parallel implementation.

It should be noted that the idea is applicable for the existing video coding standards, as well as the video standards to be defined in the future.

Thus a method according to claim 1 is proposed wherein the proposed method is a method for encoding an image frame comprising macroblocks and comprises the steps of: using original image data of the image frame for determining, for each macroblock, a corresponding intra-prediction, determining, for each macroblock, a corresponding residual, determining, for each macroblock, a variance of the corresponding residual, determining a frame target bit rate for the image frame, using the frame target bit rate and at least one of the determined variances for determining, for each macroblock, a corresponding macroblock target bit rate, using the macroblock target bit rates for determining, for each residual, a corresponding target quantization parameter, and encoding the residual using the corresponding quantization parameters.

The claims dependent on claim 1 comprise additional features of further embodiments of the proposed method.

The invention further proposes a corresponding device according to claim 7. Claims dependent on claim 7 comprise additional features of further embodiments of the proposed device.

For I frames, the method comprises using original frame data for intra-predicting macroblocks of a frame at least partly simultaneously. Variance of residual errors for each macroblock is calculated to determine the target bit rate for each macroblock. With reference to a $\rho$-domain source model, QP for each macroblock is obtained to perform actual intra coding.

For non-I frames, the method further comprises determining residual errors for macroblocks using motion estimation. Residual errors with lower rate-distortion cost are chosen to calculate QP for macroblocks in the way described in I frames.

Instead of calculating QP for macroblocks of a frame in serial order, QPs for the macroblocks in a frame are obtained before encoding the frame in the proposed method. A $\rho$-domain source modelling is used in the proposed method to calculate QP for each macroblock in a frame. The invention is not restricted to use of a certain rate control at frame level, i.e. any of the methods known from prior art may be used.

Drawings

Exemplary embodiments of the invention are illustrated in the drawings and are explained in more detail in the following description.

In the figures:

Fig. 1    depicts an exemplary frame composed of exemplary macroblocks,

Fig. 2    depicts an exemplary pseudo intra-predicted macroblock,

Fig. 3    depicts a flow chart of an exemplary embodiment of the inventive bit rate control method for intra-predicted frames,

Fig. 4    exemplarily depicts macroblocks of an exemplary reference frame put in correspondence to macroblocks of an exemplary intra-predicted frame using motion vectors,

Fig. 5    depicts a flow chart of an exemplary embodiment of the inventive bit rate control method for inter-predicted frames, and

Fig. 6    depicts a flow chart of an exemplary embodiment of the inventive encoding method for inter- predicted frames.

Exemplary embodiments

The exemplary embodiments described in the following are thought for illustrative purposes only. In particular, they should not be construed as limiting to the desired scope of protection which is solely defined by the claims.

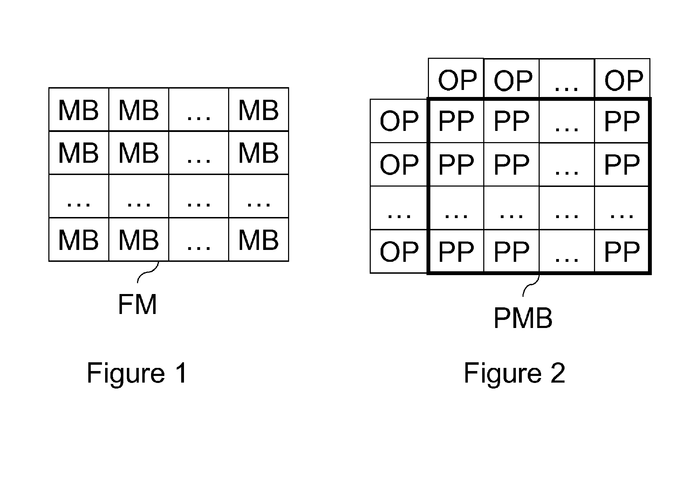

Fig. 1 depicts an exemplary frame FM which is composed of macro blocks MB. First, it is assumed that frame FM is an entirely intra-predicted frame also called an I-frame. To allow intra prediction for the macro blocks MB of frame FM simultaneously or in an independent manner, original frame data intra prediction, also called pseudo intra prediction, is proposed.

Figure 2 shows a pseudo-intra predicted macro block PMB. It is composed of predicted pixels PP. Original pixel OP at top and to the left of the pseudo-intra predicted macro block PMB are used as predictors of the predicted pixels PP.

Prediction modes for macroblocks can be various such as intra 4x4, intra 16x16 and so on. It is to be noted that proposed pseudo intra prediction is the same with H.264 standard except the predictors.

After pseudo-intra prediction, variance $V_i$ of the residual errors of each macroblock MB with respect to the corresponding pseudo-predicted macro block PMBN can be obtained. It is an aspect of the invention efforts done, that relative variance of residual errors of each macroblock is recognized as being indicative of relative encoding complexity $C_i$ of $i$-th macroblock MB wherein N denotes the number of macroblocks per frame:

$$C_i = \frac{V_i}{\sum_{k=0}^{N-1} V_k}$$

Based on relative encoding complexities $C_i$, frame target bit rate $T_F$ calculated at frame level is distributed over macroblocks. The following formula is a sample method for calculating target bit rate $T_i$ for $i$-th macroblock MB:

$$T_i = C_i \cdot T_F$$

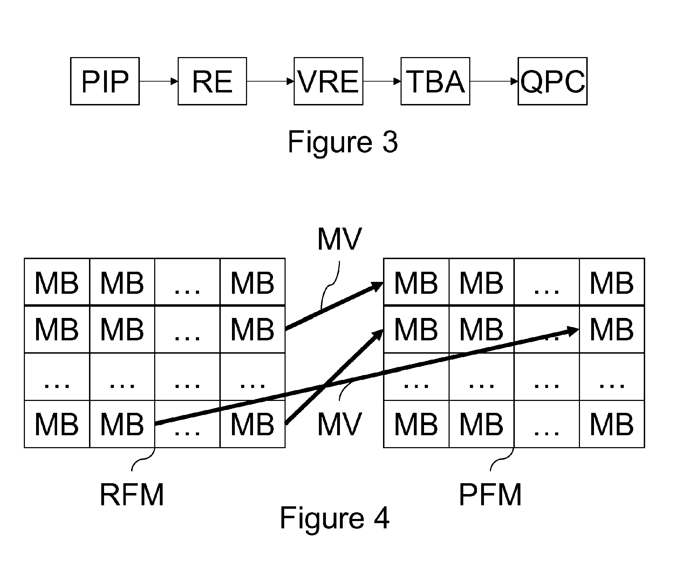

The flow of calculating target bit rate for macroblocks in I frames is depicted in Figure 3.

That is, original frame data is used as predictor in an original frame data intra-prediction step PIP, which is followed by a residual error determination step RE. Then, the variance VRE of each of the determined residual is determined. All these steps may be performed for each macroblock in an I-frame independently which allows for a parallel implementation or a simultaneous execution.

Only for step of target bit rate assignment TBA a dependency of assigned target bits on other macro blocks than the one to which the target bits are assigned exists.

Subsequent quantization parameter calculation QPC can be done for each macroblock MB, independently.

For quantization parameter calculation QPC, linear $\rho$-domain source model of He and Mitra is used.

A frame's rate is well represented by a linear function of the percentage $\rho$ of null quantized transform coefficients:

$$T_F \approx \alpha \cdot \rho + b$$

where b is the number of overhead bits that codes all the information that is not related to discrete cosine transform (DCT) coefficients, while $\alpha$ is the ratio between the percentage of bits that code the transform coefficient and $\rho$.

Thus, a target average percentage $\rho_i$ of zeros for each macroblock can be obtained through the equation

$$\rho_i \approx \frac{C_i \cdot T_F - b}{\alpha}$$

Where the slope $\alpha$ and intercept $b$ are estimated from previously coded pictures.

As known from S. Milani, L. Celetto, and G. Mian, the target average percentage $\rho_i$ of zeros may be used for determining a target quantized signal energy $E_i$ for macroblock $i$:

$$E_i = \varsigma_{k,0} + \varsigma_{k,1}(1 - \rho_i) + \varsigma_{k,2}(1 - \rho_i)^2$$

There is a set of coefficients $\zeta_{k,i}$, with distinct sub-sets of coefficients for I-frames, B-frames and p, frames.

It is further known from S. Milani, L. Celetto, and G. Mian that target quantized signal energy $E_i$ for can be used for determining a quantization step $\Delta_i$ for each macroblock:

$$\Delta_i = \frac{E_i}{\sum_{m,n=0}^{M} err_i(m,n)}$$

wherein each macroblock has $M$ columns and $M$ rows and $err_i(m,n)$ is the difference between a pixel in column m and row n of macroblock $i$ and its pseudo-intra prediction.

Finally, there is a one-to-one mapping between a target quantization step $\Delta_i$ and a preliminary quantization parameter $pQP_i$. The target quantization parameter $QP_i$ is the determined using an upper bound MQP wherein $QP_i$ equals $pQP_i$ if $pQP_i$ is smaller than the upper bound $MQP$, and $QP_i$ equals MQP, otherwise. $MQP$ is defined as

$$MQP = \max\left\{1, QP_F - A, \min\left\{51, QP_F + A\right\}\right\}$$

wherein *A* is a constant parameter indicating a relaxing zone of QP variance within a frame. In an exemplary implementation, a value of 3 for *A* achieved good performance.

After quantization parameter $QP_i$ has been determined, I-frame macroblocks are intra predicted, this time, using reconstructed frame data being reconstructed after quantization using the determined quantization parameters. Then, the residual errors of each macroblock MB with respect to the corresponding predicted macro block predicted from reconstructed frame data can be obtained, quantized using the determined quantization parameter $QP_i$ and encoded into a bit stream.

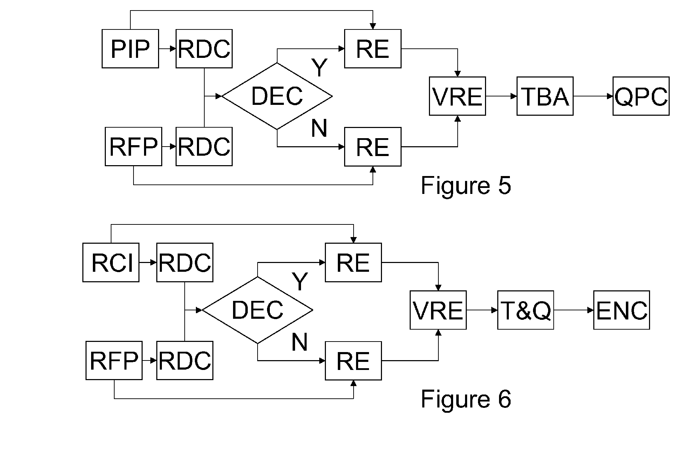

Processing steps for frames which do comprise inter-predicted macroblocks Mb, said frames being called non I-frames, are depicted in fig. 5.

Figure 4 is an example to illustrate the motion estimation performed by macroblocks MB in this stage. Macroblocks MB of a predicted frame FRM are predicted using macro blocks from a reference frame RFM, said prediction resulting in motion vectors MV.

Macroblocks may only use one reference frame to get best motion estimation. However, multiple reference frames can be used for bidirectional predicted frames (B-frames) and predicted (P-frames).

For macroblocks MB of non I-frames, a pseudo intra-prediction step PIP, as described above for I-frame macroblocks and a reference frame prediction RFP or inter-prediction step is performed for the macroblock. The rate-distortion costs of both predictions are compared and it is decided in decision step DEC which of the two predictions yields the lower costs. The corresponding prediction, i.e. original frame intra-prediction or reference frame inter-prediction, is then used for determining a residual error variance in steps RE and VRE.

The determined variances are then used for steps target bit rate assignment TBA and quantization parameter calculation QPC as described above for I-frame macroblocks.

Figure 6 exemplarily depicts a flow chart of subsequent encoding of macroblocks with the determined quantization parameters for non-I frame macroblocks.

For macroblocks MB of non I-frames, an intra-prediction step RCI using reconstructed frame data being reconstructed after quantization using the determined quantization parameters, as described above for I-frame macroblocks, is performed. Further a reference frame prediction RFP or inter-prediction step is performed for the non I-frame macroblock. The rate-distortion costs of both predictions are compared and it is decided in decision step DEC which of the two predictions yields the lower costs. The corresponding prediction, i.e. reconstructed frame intra-prediction or reference frame inter-prediction, is then used for determining a residual error in step RE and for determining a residual error variance in step VRE.

The determined residual error is then transformed and quantized in transformation and quantization step T&Q ere to entropy encoding the quantized transformation result in step ENC.

**Claims**

1. Method for encoding an image frame comprising macroblocks, said method comprises the steps of

   - (a) using original image data of the image frame for determining (PIP), for each macroblock, a corresponding intra-prediction,
   - (b) determining (RE), for each macroblock, a corresponding residual,
   - (c) determining (VRE), for each macroblock, a variance of the corresponding residual,
   - (d) determining a frame target bit rate for the image frame,
   - (e) using the frame target bit rate and at least one of the determined variances for determining (TBA), for each macroblock, a corresponding macroblock target bit rate,
   - (f) using the macroblock target bit rates for determining (QPC), for each residual, a corresponding target quantization parameter, and
   - (g) encoding (ENC) the residual using the corresponding quantization parameters.

2. Method according to claim 1, wherein at least one of the steps of (a), (b), (c), (e), (f) and (g) is performed for the macroblocks in parallel.

3. Method according to claim 1 or 2, wherein intra-predictions are determined using original image data atop and to the left of the corresponding predicted macroblocks.

4. Method according to claim 1, 2 or 3, wherein the image frame is an intra-predicted image frame and each of the residuals is determined with respect to the corresponding intra-prediction.

5. Method according to claim 1, 2 or 3, wherein the image frame is a non-intra-predicted image frame and each of the residuals is determined, either, with respect to the corresponding intra-prediction, if the rate-distortion-cost of the corresponding intra-prediction is smaller than the rate-distortion-cost of a corresponding inter-prediction, or, with respect to the corresponding inter-prediction, otherwise.

6. Method according to claim 5, wherein encoding the residual comprises

- using reconstructed image data of the image frame for determining (RCI, RDC), for each macroblock, a corresponding further intra-prediction and a corresponding intra-prediction rate-distortion cost,
- using reconstructed image data of a reference image frame for determining (RFP, RDC), for each macroblock, a corresponding further inter-prediction and corresponding inter-prediction rate-distortion cost,
- determining (DEC), for each macroblock, whether the determined inter-prediction rate-distortion-cost is lower than the determined intra-prediction rate-distortion-cost,
- and, if so, determining (RE), for each macroblock, a corresponding yet further residual with respect to the corresponding further inter-prediction, or
- determining (RE), for each macroblock, the corresponding yet further residual with respect to the corresponding further intra-prediction, otherwise,
- transforming and quantizing (T&Q) the determined yet further residuals, and
- entropy encoding (ENC) the quantized transforms of the determined yet further residuals.

7. Device for encoding an image frame comprising macroblocks, said device comprises

- means for determining an intra-prediction of the image frame using original image data of the image frame,
- means for determining a residual of a macroblock with respect to a prediction,
- means for determining a variance of the determined residual,
- means for determining a frame target bit rate for the image frame,
- means for determining a macroblock target bit rate and adapted for using the frame target bit rate and at least one of the determined variances for determining the macroblock target bit rate,
- means for determining a target quantization parameter for the residual and adapted for using the macroblock target bit rates for determining the target quantization parameter, and
- means for encoding the residual using the corresponding quantization parameters.

8. Device according to claim 7, wherein the device is adapted for determining at least one of:

the intra-prediction,
the residual,
the variance,
the macroblock target bit rate, and
the target quantization parameter,
for the macroblocks in parallel.

9. Device according to claim 8, wherein the device is further adapted for encoding the residuals of the macroblocks in parallel.

10. Device according to claim 7, 8 or 9, wherein said means for intra-prediction is adapted for determining the intra-prediction using original image data atop and to the left of a corresponding predicted macroblock.

11. Device according to one of the claims 7-10, wherein the image frame is an intra-predicted image frame and said means for determining a residual is adapted for determining the residual with respect to a corresponding inter-prediction of a corresponding macroblock.

12. Device according to one of the claims 7-10, wherein the image frame is an non-intra-predicted image frame and said means for determining a residual is adapted for determining the residual, either, with respect to the corresponding intra-prediction, if the rate-distortion-cost of the corresponding intra-prediction is smaller than the rate-distortion-cost of a corresponding inter-prediction, or, with respect to the corresponding inter-prediction, otherwise.

13. Device according to claim 12, wherein the means for encoding the residual are adapted for

- using reconstructed image data of the image frame for determining, for each macroblock, a corresponding further intra-prediction and a corresponding intra-prediction rate-distortion cost,
- using reconstructed image data of a reference image frame for determining, for each macroblock, a corresponding further inter-prediction and a corresponding inter-prediction rate-distortion cost,
- determining, for each macroblock, whether the determined inter-prediction rate-distortion-cost is lower than the determined intra-prediction rate-distortion-cost,
- and, if so, determining, for each macroblock, a corresponding yet further residual with respect to the corresponding further inter-prediction, or
- determining, for each macroblock, the corresponding yet further residual with respect to the corresponding further intra-prediction, otherwise,
- transforming the determined yet further residuals,
- quantizing the transform of the determined yet further residuals, and
- entropy encoding the quantized transforms of the determined yet further residuals.

Figure 1

Figure 2

Figure 3

Figure 4

Figure 5

Figure 6

| | Europäisches Patentamt European Patent Office Office européen des brevets | **EUROPEAN SEARCH REPORT** | Application Number EP 09 30 5392 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JORDI RIBAS-CORBERA ET AL: "Q2 part A: macroblock-layer rate control" JOINT VIDEO TEAM (JVT) OF ISO/IEC MPEG & ITU-T VCEG(ISO/IEC JTC1/SC29/WG11 AND ITU-T SG16 Q6), XX, XX, no. M2418, 14 July 1997 (1997-07-14), XP030031690 * section 2 * ----- | 1-11 | INV. H04N7/26 |
| Y | US 2007/153892 A1 (YIN PENG [US] ET AL) 5 July 2007 (2007-07-05) * paragraphs [0036] - [0052] * ----- | 1-11 | |
| A | TIAGO A. DA FONSECA, YUXIN LIU, RICARDO L. DE QUEIROZ: "Open-Loop Prediction in H.264/AVC for High Definition Sequences" SIMPÓSIO BRASILEIRO DE TELECOMUNICAÇÕES SBRT, [Online] 3 September 2007 (2007-09-03), - 6 September 2007 (2007-09-06) XP002545660 Recife, PE, Brazil Retrieved from the Internet: URL:http://image.unb.br/queiroz/publicatio ns.html> [retrieved on 2009-09-11] * section III * ----- | 1-4,7-11 | |
| A | RICHARDSON IAIN E G: "H.264/MPEG-4 part 10: Intra Prediction" INTERNET CITATION, [Online] XP002973807 Retrieved from the Internet: URL:www.vcodex.com> [retrieved on 2002-10-07] * section 2 * * figure 2.3 * ----- -/-- | 3,10 | TECHNICAL FIELDS SEARCHED (IPC) H04N |

The present search report has been drawn up for all claims

| Place of search | Date of completion of the search | Examiner |
|---|---|---|
| The Hague | 30 September 2009 | Ferré, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

Europäisches Patentamt
European Patent Office
Office européen des brevets

# EUROPEAN SEARCH REPORT

**Application Number**

EP 09 30 5392

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WIEGAND T ET AL: "Rate-constrained coder control and comparison of video coding standards" IEEE TRANSACTIONS ON CIRCUITS AND SYSTEMS FOR VIDEO TECHNOLOGY, IEEE SERVICE CENTER, PISCATAWAY, NJ, US, vol. 13, no. 7, 1 July 2003 (2003-07-01), pages 688-703, XP011099260 ISSN: 1051-8215 * section III * | 5,6,12, 13 | |
| D,A | MILANI S ET AL: "An Accurate Low-Complexity Rate Control Algorithm Based on -Domain" IEEE TRANSACTIONS ON CIRCUITS AND SYSTEMS FOR VIDEO TECHNOLOGY, IEEE SERVICE CENTER, PISCATAWAY, NJ, US, vol. 18, no. 2, 1 February 2008 (2008-02-01), pages 257-262, XP011202542 ISSN: 1051-8215 * Section III * * Appendix * | 1,7 | |
| | | | TECHNICAL FIELDS SEARCHED (IPC) |

The present search report has been drawn up for all claims

| Place of search | Date of completion of the search | Examiner |
|---|---|---|
| The Hague | 30 September 2009 | Ferré, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 30 5392

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2009

| Patent document cited in search report | Publication date | Patent family member(s) | Publication date |
|---|---|---|---|
| US 2007153892 A1 | 05-07-2007 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Optimum Bit Allocation and Accurate Rate Control for Video Coding via ρ-domain Source Modelling. *IEEE Trans. Circuits Syst. Video Technol.,* 2002, vol. 12, 840-849

- **S. Milani ; L. Celetto ; G. Mian.** An accurate low-complexity rate control algorithm based on (ρ,Eq)-Domain. *IEEE Trans. Circuits Syst. Video Technol.,* February 2008, vol. 18 (2